# EUROPEAN PATENT APPLICATION

(11) **EP 2 865 768 A2**
(43) Date of publication of application: **29.04.2015**
(21) Application number: 14184621.2
(22) Date of filing: 12.09.2014
(51) Int. Cl.: C21D 9/38, B22D 11/128, C23C 8/28

(54) **Continuous casting roller and method for its production**

(30) Priority: 28.10.2013 SE 1300673
(71) Applicant: Aktiebolaget SKF, S 415 50 Göteborg (SE)
(72) Inventor: Andersson, Marcus C., 431 66 Mölndal (SE)
(74) Representative: Gentzel, Marcus

(57) **Abstract**

A continuous casting roller (1) for supporting and transporting hot material in a continuous caster and a method for producing such a roller are disclosed. The continuous casting roller (1) has a supporting portion (2) for supporting and transporting hot material. The supporting portion (2) has an extension in an axial direction (A) and in a radial direction (R) and comprises a centre portion (3) of low alloyed steel. The centre portion (3) is coaxially enclosed by a plurality of layers which comprises a first layer (10), wherein the first layer (10) comprises austenite, and a second layer (20) of at least one ceramic material. The first layer (10) is coaxially enclosed by the second layer (20).

## Description

### Technical field

The present disclosure relates to a continuous casting roller, in particular to a continuous casting roller for continuous casting of steel. It also relates to a method for producing such a roller.

### Background

Continuous casting of steel is the process whereby slabs of steel are continuously cast from molten steel. More specifically, the molten steel is poured from a ladle down into a tundish from which it is conveyed to a water-cooled mould (primary cooling). The molten steel is thereafter solidified into the semi-finished slab for subsequent rolling in the finishing mills. The slab is continuously fed between two tracks formed by a plurality of roll line assemblies, each of which comprises one or several rollers and other parts such as seals and bearings, so as to further shape and cool the slab to the final thickness of the cast material. In this manner, the slab is immediately supported by closely spaced rollers. To increase the rate of solidification, the roll line assemblies, or rollers, are typically water-cooled internally and the slab may be sprayed with large amounts of water as it passes through a spray-chamber (secondary cooling).

In a curved apron casting machine, the slab exits the mould vertically (or on a near vertical curved path) into the strand top segment and as it travels through the curved strand it exits the strand in a horizontal position. Continuous casting of steel is a demanding process involving high temperatures and large temperature variations. Furthermore, water cooling of the slab, or steel strand, results in a very corrosive environment. Accordingly, the roll line assembly is required to withstand very harsh conditions that are gradually degrading the assembly and its components. As an example, the material of the rollers may degrade due to corrosion, fatigue and wear. Eventually, the roller or the entire roll line assembly must be replaced or undergo maintenance requiring a lengthy and costly interruption of the continuous casting process.

One roll line assembly component that is particularly subjected to degradation is the roller, since it is in direct contact with the hot steel slab. The roller is therefore an important and determining factor in the overall lifetime of a roll line assembly. Weld cladding is the industry standard method for improving the corrosion, wear, high temperature and fatigue resistance of the rollers. Using this method, the low-alloyed roller is provided with a surface overlay, for example consisting of stainless steel. Weld cladding might be considered a complex process. The method not seldom results in the roll mantle surface having an inhomogeneous microstructure and, consequently, inhomogeneous mechanical properties. Furthermore, it can be difficult to refurbish rollers using weld cladding.

It is desirable that continuous casting rollers should be high performing as well as simple and cost effective to produce and refurbish. Existing continuous casting rollers can be improved in these respects.

### Summary

The objective of the present disclosure is to provide an improved or alternative continuous casting roller. Aspects of particular interest include the performance of the continuous casting roller, for example in terms of corrosion, wear, fatigue and high temperature resistance, and the cost and simplicity of its production.

The invention is defined by the independent claim. Embodiments are set forth in the dependent claims, the description and the drawings.

According to a first aspect of the present invention, there is provided a continuous casting roller for supporting and transporting hot material in a continuous caster. The continuous casting roller has a supporting portion adapted to support hot material. The supporting portion has an extension in an axial direction and in a radial direction and comprises a centre portion of low-alloyed steel. The centre portion is coaxially enclosed by a plurality of layers which comprises a first layer, wherein the first layer comprises austenite, and a second layer of at least one ceramic material. The first layer is coaxially enclosed by the second layer.

For brevity, the term "roller" will henceforth be used to mean "continuous casting roller".

A roller having the structure described above can have a high resistance to corrosion, wear, fatigue and high temperatures. This may lead to a longer overall lifetime of the roller and reduced maintenance costs. Moreover, the roller can be produced by a simple and cost-efficient process and from materials which are commonly available and relatively inexpensive, such as low alloyed steels.

The layered structure of the roller can result in a roller which combines desirable properties of different materials. The layers can have different or similar functions. For example, the first layer of hardened austenite can help improve the load-supporting properties of the roller. The roller's resistance to corrosion, wear and fatigue can be strengthened by the second layer of at least one ceramic material. The third layer of an iron oxide can increase the roller's resistance to corrosion and wear.

A diffusion layer can be arranged between the centre portion and the first layer, as seen in the radial direction of the supporting portion, so that the diffusion layer is coaxially enclosed by the first layer. The centre portion is coaxially enclosed by the diffusion layer. Such a diffusion layer defines a foundation in terms of load carrying capacity with a deep and continuous radial transition from the material of the centre portion to the material of the first layer. Stated in another way, the diffusion layer is a portion of the roller where the roller gradually passes from being formed by the material of the centre portion to being formed by the material of the first layer in terms of increasing level of solid solution hardening and precipitation hardening. The diffusion layer may increase the load carrying capacity and the fatigue resistance of the roller.

The roller can comprise transitional regions between any two sequential layers. Such a transitional region defines a transition from the material of one of the layers to the the material of the other layer.

The centre portion can comprise less than about 5% by weight of chromium, less than about 4% by weight of nickel and less than about 2% by weight of molybdenum. In terms of performance and economics, low alloyed steels with this composition are particularly suitable for the present invention.

The first layer can comprise hardened austenite, something which can improve the performance of the roller. By "hardened austenite" is meant materials which result from subjecting austenite to a hardening process. Martensite and bainite are examples of such materials. The first layer can comprise one of martensite and bainite. Martensite and bainite are hard materials that can help improve the capacity of the roller to withstand heavy loads.

The second layer can be coaxially enclosed by a third layer of at least one iron oxide. The provision of a third layer can improve the performance of the roller. The second layer can comprise at least one of ε-phase and γ'-phase. For example, the second layer can comprise ε-phase Fe₂₋₃(C,N) and/or γ'-phase Fe₄(C,N). The third layer can comprise the iron oxide magnetite (Fe₃O₄). The third layer can be the outermost layer as seen in the radial direction. The corrosion, wear, fatigue and high temperature resistance properties of ε-phase, γ'-phase and magnetite are such that the provision of layers comprising these compounds can improve the capacity of the roller to withstand the harsh environment in a caster. Such layers are typically provided near the outer surface of the supporting portion as seen in the radial direction.

The third layer can comprise iron oxide wüstite (FeO) and/or hematite (Fe₂O₃). The relative amounts of the different iron oxides in the third layer is dependent on technical aspects of the production of the roller, such as the production temperatures. According to a variant of the roller, the amount of magnetite in the third layer is larger than the amount of wüstite and the amount of hematite. In some applications, some of the properties of magnetite, such its density and adhesive capacity, can make this material particularly suitable for forming the outermost layer of the roller.

A total case depth can be from about 50 µm to about 1000 µm, wherein by "total case depth" is meant the radial distance between the outer surface of the roller and the radius at which the hardness of the roller is 30 HV greater than the hardness of the material of the centre portion.

A roll line assembly can comprise at least one roller according to the description above and rotation means for rotating a roller. The rotation means and the roller are operably connected. The roller can be formed in one piece or comprise several components, such as a shaft operatively connected to a roll mantle element. The shaft may be rotatably arranged or non-rotatably arranged relative to the roll mantle element.

According to a second aspect of the present invention, there is provided a method for producing a continuous casting roller. The method comprises a step of providing a work piece of low alloyed steel with an extension in an axial direction and in a radial direction. The method also comprises a step of heat treating the work piece by austenitic nitrocarburizing, whereby an austenite layer and a compound layer are formed. By "austenite layer" is meant a layer comprising austenite. A diffusion layer can be formed by the step of heat treating the work piece.

A roller produced according to the method described above can have a high resistance to corrosion, wear, fatigue and high temperatures, which may increase the overall lifetime of the roller and reduce maintenance costs. Moreover, the production costs can be reduced by the use of low alloyed steel, which is relatively inexpensive, and the fact that the heat treatments can be of short duration. Note that, by this method, it is possible to produce a roller according to any of the features and effects as mentioned above with respect to the first aspect of the present invention. In particular, the work piece can, after having been subjected to the heat treating step, the oxidizing step and the hardening step, form a supporting portion according to the first aspect of the present invention.

The compound layer can comprise at least one ceramic material. The compound layer can comprise at least one of ε-phase and γ'-phase. The ε-phase can be ε-phase Fe₂₋₃(C,N). The γ'-phase can be γ'-phase Fe₄(C,N). These compounds can improve the corrosion, wear, fatigue and high temperature resistance of the supporting portion and are typically provided near the outer surface of the supporting portion as seen in the radial direction.

The method can comprise a step of oxidizing the heat-treated work piece, whereby an iron oxide layer is formed. The method can comprise a step of hardening the austenite layer. By "hardening the austenite layer" is meant a process by which the hardness of that layer is increased. Including one or both of these steps can result in a roller with improved performance.

The iron oxide layer can form the outer surface of the supporting portion as seen in the radial direction. The iron oxide layer can comprise magnetite (Fe₂O₄). Magnetite has certain properties, such as a high density and adhesive capacity, that can help improve the wear resistance of the supporting portion. The iron oxide layer can comprise wüstite (FeO) and/or hematite (Fe₂O₃). The relative amounts of different iron oxides in the iron oxide layer depend for example on the temperature and atmosphere used during the oxidization process. In some applications, the iron oxide layer can advantageously comprise more magnetite than wüstite and hematite.

The austenite layer can be hardened by martensitic hardening. By "martensitic hardening" is meant a process by which austenite is at least partially transformed into martensite. Alternatively, the austenite layer can be hardened by bainitic hardening. By "bainitic hardening" is meant a process by which austenite is at least partially transformed into bainite. Hence, the hardening of the austenite layer can result in a layer comprising one of martensite and bainite being formed. Martensite and bainite are hard materials, and a roller comprising a layer comprising any of these materials may be able to withstand heavy loads.

### Brief description of the drawings

The various aspects of the invention, including its particular features and advantages, will be readily understood from the following detailed description and the accompanying drawings, in which:
Figure 1 is a cross-sectional perspective view of a roller showing its inner layered structure;
Figure 2 is a flowchart of some of the steps of a method for producing a roller; and
Figure 3 is a schematic perspective view of some of the components of a roll line assembly.

The figures are not drawn to scale. As illustrated in the figures, the sizes of layers and regions are exaggerated for illustrative purposes and, thus, are provided to illustrate the general structures of embodiments of the present invention.

### Detailed description

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference characters refer to like elements throughout the description.

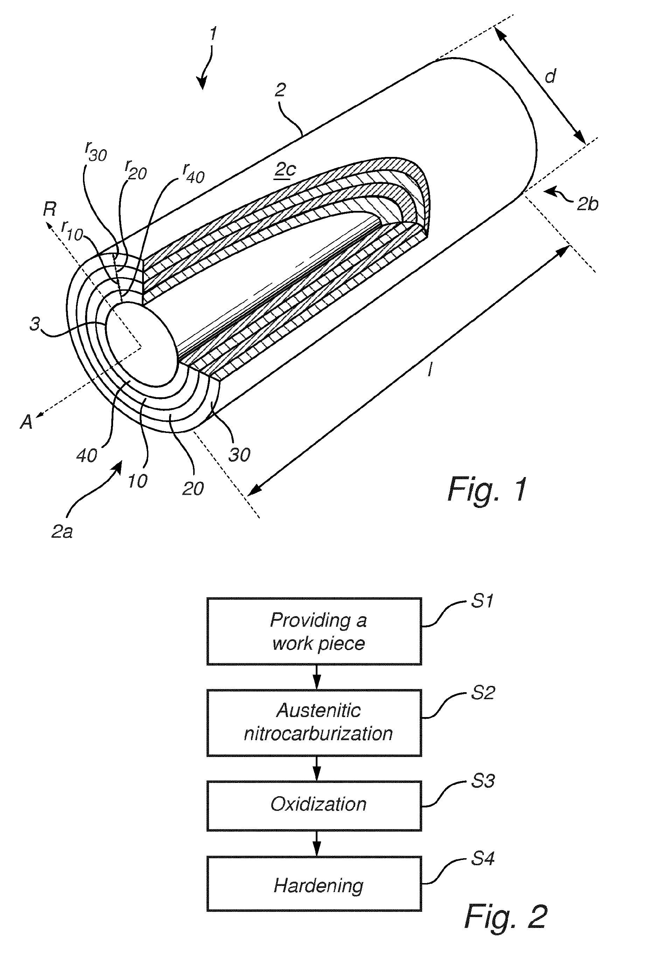

Figure 1 shows the supporting portion 2 of a continuous casting roller 1 for supporting and transporting hot casted material, such as steel, in a continuous caster. The supporting portion 2 has the general shape of a circular cylinder and defines an axial direction A and a radial direction R. The two axial end portions 2a, 2b of the supporting portion 2 can be configured to enable operative engagement between the roller 1 and, for example, a supporting structure or bearings. To this end, the two axial end portions 2a, 2b can present for example protrusions and/or depressions. The supporting portion 2 can be designed without any through-holes, as in Figure 1, or can be provided with a straight through-hole (not shown) in the axial direction A for receiving a shaft. Such a through-hole can extend circularly around the center of the supporting portion 2 as seen in the radial direction R. Stated in another way, the supporting portion 2 can be provided with a straight circular through-hole centered on the center axis of the supporting portion 2. The supporting portion 2 has an axial length 1 and a diameter d. The axial length 1 can for example be from about 100 mm to about 1500 mm. The diameter d can for example be from about 100 mm to about 400 mm.

The supporting portion 2 comprises a centre portion 3 formed by low alloyed steel. The centre portion 3 is coaxially enclosed by a plurality of layers arranged sequentially as seen in the radial direction R. Each layer has an extension in the radial direction R and in the axial direction A. The thickness of a layer, as seen in the radial direction R, can vary in the axial direction A.

The centre portion 3 is enclosed by a first layer 10. A diffusion layer 40 may be arranged between the centre portion 3 and the first layer 10 so that the centre portion 3 is coaxially enclosed by the diffusion layer 40 which, in turn, is coaxially enclosed by the first layer 10. The diffusion layer 40 defines a transition region, as seen in the radial direction R, from the material of the centre portion 3 to the material of the first layer 10. The diffusion layer 40 can be a portion of the roller 1 where the composition of the roller 1 passes from comprising about 0.1 wt% of nitrogen to comprising about 3 wt% of nitrogen. The diffusion layer 40 can be a portion of the roller 1 where the composition of the roller 1 passes from comprising about 0.1 wt% of carbon to comprising about 3 wt% of carbon. The diffusion layer 40 can be a portion of the roller 1 where the composition of the roller 1 passes from comprising about 0.1 wt% of nitrogen plus carbon to comprising about 3 wt% of nitrogen plus carbon. The diffusion layer 40 can be a portion of the roller 1 which is arranged between the first layer 10 and a portion of the roller 1 having a hardness of about 30 HV greater than the hardness of the centre portion 3. The thickness r₄₀ of the diffusion layer 40 can be from about 50 µm to about 800 µm. In figure 1, the first layer 10 comprises hardened austenite, for example martensite or bainite. Note that such a layer can comprise austenite, for example austenite that remains unaffected by the hardening process. The thickness r₁₀ of the first layer 10 can be from about 0.5 µm to about 100 µm. The first layer 10 can have a nitrogen content up to about 5 wt%. The first layer 10 can have a carbon content up to about 5 wt%. The first layer 10 can have a nitrogen plus carbon content up to about 5 wt%. The first layer 10 is coaxially enclosed by a second layer 20. Hence, the first layer 10 is arranged between the diffusion layer 40 and the second layer 20 as seen in the radial direction R. The second layer 20 can have a thickness r₂₀ from about 5 µm to about 35 µm. The second layer 20 can have a nitrogen content in the range of 5-12 wt%. The second layer 20 can have a carbon content in the range of 5-12 wt%. The second layer 20 can have a nitrogen plus carbon content in the range of 5-12 wt%. The second layer 20 comprises at least one ceramic material, for example ε-phase Fe₂₋₃(C,N) and/or y'-phase Fe₄(C,N).

The second layer 20 can be coaxially enclosed by a third layer 30 of at least one iron oxide, for example magnetite (Fe₃O₄), wüstite (FeO) and/or hematite (Fe₂O₃). The second layer 20 is thus arranged between the first layer 10 and the third layer 30 as seen in the radial direction R. The third layer 30 can form an outer surface 2c, as seen in the radial direction R, of the supporting portion 2. The third layer 30 can have a thickness r₃₀ from about 0.5 µm to about 3 µm.

Between any two radially sequential layers, there may be a transitional region in which the material of the supporting portion varies, as seen in the radial direction R, from the material of one of the layers to the material of the other layer.

Figure 2 is a flowchart of some of the steps of a method for producing a continuous casting roller 1 according to the present invention. A number of method steps, which can impact the properties of the finished product in terms of resistance to corrosion, wear, fatigue and high temperature are involved in producing the roller 1. In step S1, a work piece of low alloyed steel is provided. The work piece has an extension in a radial direction R and in an axial direction A. The work piece has an axial length 1, which can be from about 100 mm to about 1500 mm, and a diameter d, which can be from about 100 mm to about 400 mm.

In step S2, the work piece is heat treated by an austenitic nitrocarburizing process. The process medium of the austenitic nitrocarburizing process can be chosen from the group consisting of a gas, a liquid or a plasma. The process medium of the austenitic nitrocarburizing process comprises nitrogen and carbon as active elements. Austenitic nitrocarburizing is deemed to be known to the skilled person and thus require no further description.

An austenite layer and a compound layer are formed as a result of the austenitic nitrocarburizing process. Typically, a diffusion layer is formed as well. The compound layer comprises at least one ceramic material, for example ε-phase Fe₂₋₃(C,N) and/or γ'-phase Fe₄(C,N). Each of the compound layer and the austenite layer has an extension in the radial direction R and in the axial direction A, and the layers are arranged so that the compound layer coaxially encloses the austenite layer. The austenite layer coaxially encloses the diffusion layer. Hence, the austenite layer is arranged between the diffusion layer and the compound layer seen in the radial direction R.

The method can comprise a step S3 in which the heat-treated work piece is oxidized. Water, air or laughing gas (N₂O) can be used as a source of oxygen during this process. The oxidization results in the formation of an iron oxide layer comprising at least one iron oxide. Magnetite (Fe₃O₄), wüstite (FeO) and hematite (Fe₂O₃), or any combination thereof, can form part of the iron oxide layer.

The method can comprise a step S4 in which the austenite layer is hardened. The hardening of the austenite layer can be achieved through martensitic hardening which transforms austenite into martensite. This process involves a phase transformation of austenite to martensite. Note that residues of austenite may remain after the martensitic hardening. Martensitic hardening can be achieved through quenching (rapid cooling) from the austenitic temperature region to very low temperatures. The martensite start temperature, i.e. the temperature at which austenite starts transforming into martensite, lies below room temperature because of the high levels of nitrogen used in the austenitic nitrocarburizing process. As a result the rapid cooling, a diffusionless shear deformation process occurs and the austenite transforms to a highly strained form of ferrite that is supersaturated with carbon and/or nitrogen. This shear deformation process can produce a microstructure consisting of elongated grains (laths), which can be approximately 0.5 µm across, with a very high dislocation density that can result in a hardness of up to 750 HV (61 HRC).

Alternatively, the hardening of the austenite layer in step S4 can be achieved through bainitic hardening which transforms austenite into bainite. This process involves a phase transformation of austenite to bainite. Note that residues of austenite may remain after the bainitic hardening. The bainitic hardening is typically a tempering process which is carried out in the temperature range of 250-400°C and which causes the austenite to decompose into a lower bainitic structure. The new microstructure can comprise fine ferrite (α) plates with cementite (γ') particles precipitated within the plates. These ferrite plates, which can be approximately 0.2 µm wide and 10 µm long, are usually also separated by cementite particles. This fine microstructure can result in a hardness up to about 1000 HV (69 HRC).

In figure 2, the step of oxidizing the heat-treated work piece, step S3, occurs before the step of hardening the austenite layer, step S4. However, the step of hardening the austenite layer, step S4, can occur before the step of oxidizing the heat-treated work piece, step S3.

The work piece can, after having been subjected to the heat treating step, the oxidizing step and the hardening step, form a supporting portion 2 as described in connection with figure 1. Thus, by the method described above, it is possible to produce a roller 1 with a supporting portion 2 which has an extension in an axial direction A and in a radial direction R and which has a centre portion 3 of low alloyed steel coaxially enclosed by a plurality of layers. Each layer has an extension in the radial direction R and in the axial direction A. The thickness of a layer, as seen in the radial direction R, can vary in the axial direction A. The layers can comprise a first layer 10 in the form of a hardened austenite layer. The first layer 10 is coaxially enclosed by a second layer 20 in the form of a compound layer comprising at least one ceramic material. The second layer 20 can be coaxially enclosed by a third layer 30 in the form of an iron oxide layer comprising at least one iron oxide. Hence, the second layer 20 is arranged between the first layer 10 and the third layer 30 as seen in the radial direction R The third layer 30 can form an outer surface 2c, as seen in the radial direction R, of the supporting portion 2. The centre portion 3 is the radially innermost portion of the supporting portion 2. The centre portion 3 can be coaxially enclosed by a diffusion layer 40 which, in turn, is coaxially enclosed by the first layer 10. Hence, the diffusion layer 40 is arranged between the centre portion 3 and the first layer 10 as seen in the radial direction R. Within the diffusion layer 40, the composition of the supporting portion 2 varies, as seen in the radial direction R, from the material of center portion 3 to the material of the first layer 10. The total case depth, i.e. the depth in the radial direction R of the material affected by the steps S2 to S4, can be from about 50 µm to about 1000 µm.

Note that the roller 1 may comprise transitional regions between any two sequential layers. Such a transitional region defines a transition from the material of one of the layers to the the material of the other layer.

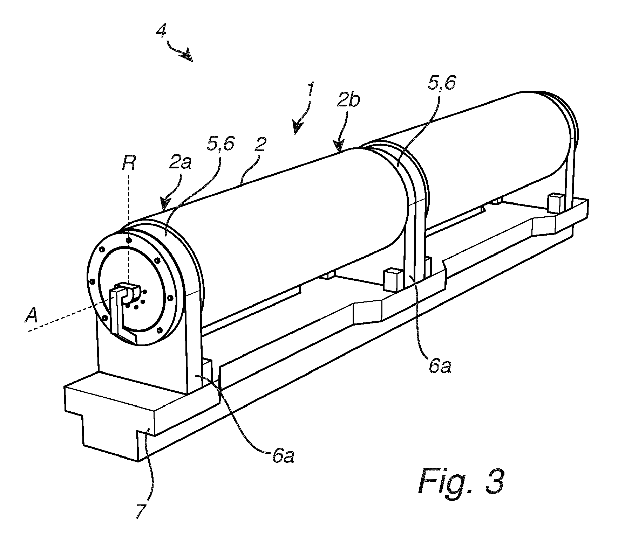

Figure 3 shows a roll line assembly 4 comprising two continuous casting rollers 1 arranged in the axial direction A. The rollers 1 have supporting portions 2. Rotation means 5 in the form of bearings 5 can be arranged by the end regions 2a, 2b of the supporting portions 2 so as to enable axial rotation of the supporting portions 2. Each bearing 5 can be encapsulated by a supporting block 6 which can have a base portion 6a. The base portions 6 can be adapted for mounting on an external structure 7. The roll line assembly 4 may further comprise one or several sealing elements (not shown), for example in order to protect the bearings 5 from the hot slab. The roller 1 can be formed in one piece. Alternatively, the roller 1 can consist of several components, for example a shaft operatively connected to a roll mantle element. The shaft may be rotatable or non-rotable.

During operation, the roller 1 is mounted in a roll line assembly 4. The roller 1 rotates about an axis in the axial direction A, whereby a material, such as hot steel, is supported by the supporting portion 2 and transported along a direction that is substantially perpendicular to the axial direction A.

Thanks to the present invention, there is provided a roller 1 which can have a high resistance to corrosion, wear, fatigue and high temperatures. This may lead to a longer overall lifetime of the roller 1 and reduced maintenance costs. Moreover, the roller 1 can be produced by a simple and cost-efficient process and from materials which are commonly available and relatively inexpensive, such as low alloyed steels.

Additionally, variations to the disclosed embodiment can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

### Reference numerals

- A: axial direction
- R: radial direction
- 1: roller
- 2: supporting portion
- 2a, 2b: axial ends of roller
- 2c: outer surface of supporting portion
- 3: centre portion
- 4: roll line assembly
- 5: bearings
- 6: supporting block
- 6a: base portion of supporting block
- 7: external structure
- 10: first layer
- 20: second layer
- 30: third layer
- 40: diffusion layer
- r10: thickness of first layer
- r20: thickness of second layer
- r30: thickness of third layer
- r40: thickness of diffusion layer
- l: length of supporting portion
- d: diameter of supporting portion

## Claims

1. A continuous casting roller (1) for supporting and transporting hot material in a continuous caster,
the roller (1) having a supporting portion (2) adapted to support hot material, the supporting portion (2) having an extension in an axial direction (A) and in a radial direction (R) and comprising a centre portion (3) of low alloyed steel,
wherein the centre portion (3) is coaxially enclosed by a plurality of layers which comprises a first layer (10), wherein the first layer (10) comprises austenite, a second layer (20) of at least one ceramic material, wherein the first layer (10) is coaxially enclosed by the second layer (20).

2. The roller (1) according to claim 1, wherein the pluraity of layers comprises a diffusion layer (40) which is coaxially enclosed by the first layer (10).

3. The roller (1) according to claim 1 or 2, wherein the centre portion (3) comprises less than about 5% by weight of chromium, less than about 4% by weight of nickel and less than about 2% by weight of molybdenum.

4. The roller (1) according to any of the preceding claims, wherein the second layer (20) comprises at least one of ε-phase and γ'-phase.

5. The roller (1) according to any of the preceding claims, wherein the first layer (10) comprises hardened austenite.

6. The roller (1) according to claim 5, wherein the first layer (10) comprises one of martensite and bainite.

7. The roller (1) according to any of the preceding claims, wherein the plurality of layers comprises a third layer (30) of at least one iron oxide, wherein the second layer (20) is coaxially enclosed by the third layer (30).

8. The roller (1) according to claim 7, wherein the third layer (30) comprises magnetite.

9. The roller (1) according to claim 7 or 8, wherein the third layer (30) is an outermost layer of the supporting portion (2) as seen in the radial direction (R).

10. The roller (1) according to any of the preceding claims, wherein a total case depth is from about 50 µm to about 1000 µm.

11. A roll line assembly (4), comprising
one or more rotation means (5) for rotating a roller (1) and
one or more rollers (1) according to any of the preceding claims, the one or more rollers (1) being operably connected to the one or more rotation means (5).

12. A method for producing a continuous casting roller (1), the method comprising the steps of:
providing a work piece of low alloyed steel, which work piece has an extension in an axial direction (A) and in a radial direction (R), and
heat treating the work piece by austenitic nitrocarburizing, whereby an austenite layer and a compound layer are formed.

13. The method according to claim 12, wherein a diffusion layer (40) is formed by the step of heat treating the work piece.

14. The method according to claim 12 or 13, wherein the method comprises a step of oxidizing the heat-treated work piece, whereby an iron oxide layer is formed.

15. The method according to any of the claims 12 to 14, wherein the method comprises a step of hardening the austenite layer.

16. The method according to claim 15, wherein the step of hardening the austenite layer is a martensitic hardening step.

17. The method according to claim 15, wherein the step of hardening the austenite layer is a bainitic hardening step.
